# EUROPEAN PATENT SPECIFICATION

(11) **EP 3 156 263 B1**
(45) Date of publication and mention of the grant of the patent: **05.09.2018**
(21) Application number: 16190266.3
(22) Date of filing: 23.09.2016
(51) Int. Cl.: B60C 11/12, B60C 11/11, B60C 11/03

(54) **PNEUMATIC TIRE**
LUFTREIFEN
PNEUMATIQUE

(30) Priority: 14.10.2015 JP 2015203074
(43) Date of publication of application: 19.04.2017
(73) Proprietor: SUMITOMO RUBBER INDUSTRIES LIMITED, Kobe-shi, Hyogo-ken (JP)
(72) Inventor: ITO, Kae, Kobe-shi, Hyogo 651-0072 (JP)
(74) Representative: Manitz Finsterwald Patentanwälte PartmbB

(56) References cited:
- EP-A2- 0 202 122
- EP-A2- 2 583 839
- WO-A1-2015/098408
- JP-A- H07 290 908
- JP-A- 2001 191 739
- JP-A- 2009 248 582
- JP-A- 2013 023 197
- JP-A- 2014 104 769
- US-A1- 2015 251 500

## Description

### Technical field

The present invention relates to a pneumatic tire whose blocks disposed in the tread portion are improved in the uneven wear resistance.

### Background art

For example, the following patent document 1 discloses a pneumatic tire provided with a plurality of blocks having a hexagonal tread, and the blocks are provided with sipes extending across the blocks' treads in the tire axial direction. Such sipes can mitigate deformation of the treads when contacting with the ground. Therefore, it is expected the heel and toe wear of the block is controlled.

In the patent document 1, both ends of the sipe are positioned at vertices of the respective side walls of the block protruding outwardly of the block (vertices of the hexagonal shape of the tread).

In general, the center blocks are subjected to higher ground pressure, therefore, there is a tendency that the sipes disclosed in the patent document 1 cause uneven wear in the vicinities of the vertices. Therefore, in the pneumatic tire of the patent document 1, there is room for further improvement in the uneven wear resistance of the blocks.

Documents WO 2015/098408 A1, EP 2 583 839 A2 and JP 2014 104769 A disclose pneumatic tires according to the preamble of claim 1. Similar pneumatic tires are also known from JP 2001 191739 A, JP 2013 023197 A, JP 2009 248582 A, US 2015/0251500 A1, EP 0 202 122 A2 and JP H07-290908 A.

Patent document 1: Japanese Patent Application Publication
No.2011-98622

### summary of the invention

### Problems to be solved by the invention

It is therefore, an object of the present invention to provide a pneumatic tire in which blocks are improved in the uneven wear resistance.

### Means of solving the Problems

According to the present invention, a pneumatic tire comprises
a tread portion provided with a plurality of blocks divided by a plurality of main grooves extending continuously in the tire circumferential direction, and a plurality of axial grooves connecting between the main grooves,
wherein
the blocks include a siped block,
the siped block has a first block side wall and a second block side wall respectively extending along the main grooves on both sides thereof, and is provided with a first sipe extending from the first block side wall to the second block side wall,
in the top view of the siped block, the first block side wall and the second block side wall are substantially v-shaped to have a vertex protruding in the tire axial direction outwardly of the block,
one end of the first sipe is positioned on one side in the tire circumferential direction of the vertex of the first block side wall, whereas the other end of the first sipe is positioned on the other side in the tire circumferential direction of the vertex of the second block side wall and
the first sipe subdivides the siped block into two regions, each region being provided with a second sipe which is connected with neither a groove nor a sipe and of which both ends are terminated within the region.

In the pneumatic tire according to the present invention, it is preferable that
the first sipe comprises a first portion including one end, a second portion including the other end, and a third portion between the first portion and the second portion,
each of the first portion and the second portion has a wavy configuration extending in the tire axial direction while oscillating in the tire circumferential direction,
the first portion and the second portion are shifted from each other in the tire circumferential direction, and
the third portion extends straight while inclining with respect to the tire axial direction.

In the pneumatic tire according to the present invention, it is preferable that
the axial length of the third portion is in a range of from 0.20 to 0.35 times the maximum length in the tire axial direction of the block.

In the pneumatic tire according to the present invention, it is preferable that
the amplitudes in the tire circumferential direction of the first portion and the second portion are in a range of from 0.05 to 0.20 times the maximum length in the tire circumferential direction of the block.

In the pneumatic tire according to the present invention, it is preferable that
the distance in the tire circumferential direction from the vertex of the first block side wall to the above-mentioned one end of the first sipe is in a range of from 0.05 to 0.20 times the distance in the tire circumferential direction from the vertex of the first block side wall to an end of the first block side wall on the above-mentioned one side in the tire circumferential direction.

In the pneumatic tire according to the present invention, it is preferable that
the main grooves include a pair of crown main grooves disposed one on each side of the tire equator, and a pair of shoulder main grooves disposed axially outside the crown main grooves,
the axial grooves include center axial grooves connecting between a pair of the crown main grooves, middle axial grooves connecting between the crown main grooves and the shoulder main grooves, and shoulder axial grooves extending from the shoulder main grooves to the tire tread edges,
the center axial grooves and the shoulder axial grooves extend straight in parallel with the tire axial direction, and
the middle axial grooves incline with respect to the tire axial direction and each have a bent part.

In the pneumatic tire according to the present invention, it is preferable that
the depth of the shoulder axial groove is in a range of from 0.05 to 0.25 times the depth of the shoulder main groove.

In this application including specification and claims, various dimensions, positions and the like of the tire refer to those under a normally inflated unloaded condition of the tire unless otherwise noted.

The normally inflated unloaded condition is such that the tire is mounted on a standard wheel rim and inflate to a standard pressure but loaded with no tire load.

The undermentioned normally inflated loaded condition is such that the tire is mounted on the standard wheel rim and inflated to the standard pressure and loaded with the standard tire load.

The standard wheel rim is a wheel rim officially approved or recommended for the tire by standards organizations, i.e. JATMA (Japan and Asia), T&RA (North America), ETRTO (Europe), TRAA (Australia), STRO (Scandinavia), ALAPA (Latin America), ITTAC (India) and the like which are effective in the area where the tire is manufactured, sold or used. The standard pressure and the standard tire load are the maximum air pressure and the maximum tire load for the tire specified by the same organization in the Air-pressure/Maximum-load Table or similar list.
For example, the standard wheel rim is the "standard rim" specified in JATMA, the "Measuring Rim" in ETRTO, the "Design Rim" in TRA or the like. The standard pressure is the "maximum air pressure" in JATMA, the "inflation Pressure" in ETRTO, the maximum pressure given in the "Tire Load Limits at various Cold Inflation Pressures" table in TRA or the like. The standard load is the "maximum load capacity" in JATMA, the "Load Capacity" in ETRTO, the maximum value given in the above-mentioned table in TRA or the like.

The tread edges Te are the axial outermost edges of the ground contacting patch which occurs under the normally inflated loaded condition when the camber angle of the tire is zero.

The tread width TW is the width measured under the normally inflated unloaded condition, as the axial distance between the tread edges Te determined as above.

The term "sipe" means a very narrow groove having a width in a range of from 0.5 to 1.5 mm and thus distinguished from grooves serving for drainage.

### Brief Explanation of the Drawings

Fig. 1 is a developed plan view showing the tread portion of a pneumatic tire as an embodiment of the present invention.
Fig. 2 is a closeup showing the center land region in Fig. 1.
Fig. 3 is a closeup showing the center block in Fig. 2.
Fig. 4 is a closeup showing the middle land region in Fig. 1.
Fig. 5 is a closeup showing the shoulder land region in Fig. 1.
Fig. 6 is a developed plan view showing the tread portion of a pneumatic tire as a comparative example.

### Description of the Preferred Embodiments

The present invention can be applied to various kinds of pneumatic tires, but suitably applied to heavy duty tires such as truck/bus tires. Thus, in conjunction with the accompanying drawings, an embodiment of the present invention will now be described in detail, taking a heavy duty as an example. As well known in the art, a heavy duty pneumatic tire comprises a tread portion whose outer surface defines the tire tread, a pair of axially spaced bead portions mounted on rim seats, a pair of sidewall portions extending between the tread edges and the bead portions, a carcass extending between the bead portions through the tread portion and the sidewall portions, and a tread reinforcing belt disposed radially outside the carcass in the tread portion.

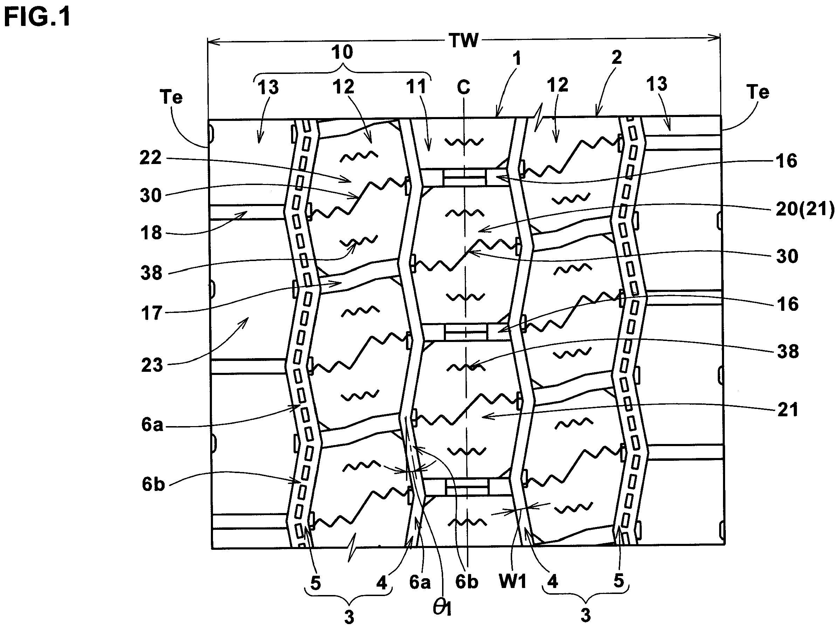

Fig. 1 shows the tread portion 2 of the tire 1 as an embodiment.
As shown in Fig. 1, the tread portion 2 is provided with land regions 10 axially divided by main grooves 3 extending continuously in the tire circumferential direction.

The main grooves 3 in this example include a pair of axially outermost shoulder main grooves 5, and a pair of axially inner crown main grooves 4 disposed one on each side of the tire equator.

Each of the main grooves 3 in this example is a zigzag groove made up of alternately circumferentially arranged first oblique segments 6a and second oblique segments 6b. The first oblique segments 6a and the second oblique segments 6b are inclined with respect to the tire circumferential direction to the opposite axial directions.
The angles θ1 of the oblique segments 6a and 6b with respect to the tire circumferential direction are, for example, set in a range of from 5 to 15 degrees.
But, the main groove 3 is not limited to a zigzag groove. The main groove 3 may be a straight groove.

It is preferable that each of the main grooves 3 has a groove width W1 in a range of from 1.5 % to 5.0 % of the tread width TW. In the case of the heavy duty pneumatic tires, it is preferable that each of the main grooves 3 has a groove depth of from 20 to 30 mm. Such main grooves 3 help to improve the wet performance and uneven wear resistance in good balance.

The land regions 10 in this example are a center land region 11 between the crown main grooves 4, two middle land regions 12 between the crown main grooves 4 and the shoulder main grooves 5, and two axially outermost shoulder land regions 13 axially outside the shoulder main grooves 5.
Each of the land regions 10 is a row of circumferentially arraigned blocks 20 divided by axial grooves.

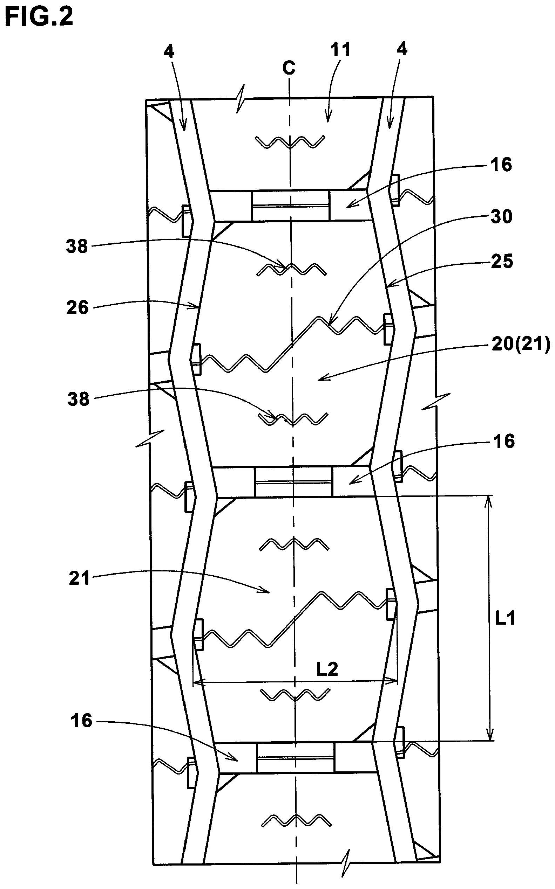

As shown in Fig. 2, the center land region 11 is a row of circumferentially arranged center blocks 21 divided by the center axial grooves 16 extending straight in parallel with the tire axial direction between the crown main grooves 4.

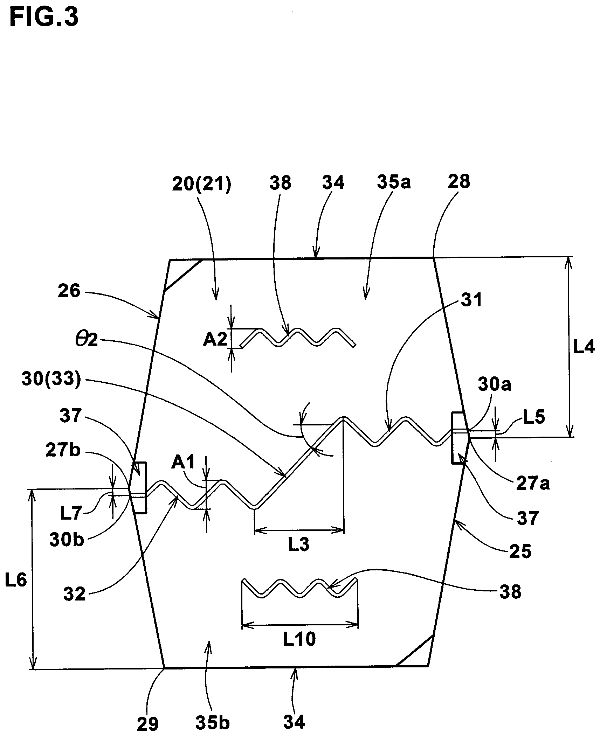

As shown in Fig. 3, the blocks 20 include a siped block 20 provided with a first sipe 30 between a first block side wall 25 and a second block side wall 26.
The first block side wall 25 and the second block side wall 26 extend along the respective main grooves 3 on both sides of the siped block. In Fig. 3, the first block side wall 25 is on the right hand of the siped block 20, and the second block side wall 26 is on the left hand of the siped block 20.
The first block side wall 25 and the second block side wall 26 each have a substantially v-shaped configuration in the top view of the block to have a vertex 27a, 27b most protruding outwardly of the block.
The siped block 20 has a pair of opposite third block side walls 34 extending between the first block side wall 25 and the second block side wall 26. In this example, the third block side walls 34 each have a straight configuration in the top view of the block. Thereby, the block 20 has a substantially hexagonal tread.

The first sipe 30 extends from the first block side wall 25 to the second block side wall 26.

One end 30a of the first sipe 30 is positioned on one side in the tire circumferential direction (upper side in Fig. 3) of the vertex 27a of the first block side wall 25, whereas the other end 30b of the first sipe 30 is positioned on the other side in the tire circumferential direction (under side in Fig. 3) of the vertex 27b of the second block side wall 26.

Since such one end 30a and the other end 30b of the first sipe 30 are disposed off the vertices 27a, 27b of the block side walls 25 and 26 where large stress is liable to concentrate, the rigidity of the block side wall in the vicinity of the vertex is maintained, and the uneven wear resistance of the block 20 is improved.

Further, since the regions 35a and 35b subdivided by the first sipe 30 each include one vertex of the block side wall, the rigidity of such regions are increased in good balance, and even wear is possible. Accordingly, uneven wear of the block 20 can be effectively controlled.

Given that the first sipe 30 is composed of a first portion 31 including the above-mentioned one end 30a, a second portion 32 including the other end 30b, and a third portion 33 between the first portion 31 and the second portion 32, it is preferable that each of the first portion 31 and the second portion 32 has a wavy configuration extending in the tire axial direction while oscillating in the tire circumferential direction, the first portion 31 extends in the tire axial direction with a constant amplitude, and the second portion 32 extends in the tire axial direction with a constant amplitude. Such first portion 31 and second portion 32 can maintain the rigidity of the block as the opposite walls of the sipe can engage with each other in order to improve the uneven wear resistance of the block. In this embodiment, each of the first and second portions 31 and 32 has a wavy configuration which is a zigzag of about 1.75 cycles when counted form the end of the straight third portion 33.

In order to effectively derive this advantages effect, it is preferred that the peak-to-peak amplitude A1 in the tire circumferential direction of each of the first portion 31 and the second portion 32 is, for example, set in a range of from 0.05 to 0.20 times the maximum length L1 in the tire circumferential direction (shown in Fig. 2) of the block 20.

It is preferable that the first portion 31 and the second portion 32 are shifted from each other in the tire circumferential direction. Such first portion 31 and second portion 32 mitigate the rigidity in the tire circumferential direction of the regions 35a and 35b subdivided by the first sipe 30, and as a result, impact on the heel-side edge and toe-side edge of the block 20 can be reduced. Accordingly, the heel and toe wear of the block 20 can be effectively controlled.

Preferably, the axial length of the first portion 31 is set to be equal to the axial length of the second portion 32. Thereby, wear of the block 20 becomes evened, and the uneven wear resistance can be further improved.

The third portion 33 in this example extends straight while inclining with respect to the tire axial direction. The angle θ2 of the third portion 33 with respect to the tire axial direction is, for example, set in a range of from 40 to 60 degrees. Such third portion 33 can effectively mitigate the deformation of the tread when contacting with the ground.

The axial length L3 of the third portion 33 is preferably not less than 0.20 times, more preferably not less than 0.25 times, and preferably not more than 0.35 times, more preferably not more than 0.30 times the maximum axial length L2 (shown in Fig. 2) of the block 20. Such third portion 33 helps to improve the wet performance and the uneven wear resistance in good balance.

If the distance between the end of the first sipe 30 and the vertex of the block side wall is small, there is a possibility that uneven wear occurs in the vicinity of the vertex. If the distance is large, the distance between the first sipe 30 and the third block side wall 34 becomes small, and there is a possibility that the rigidity of the block is decreased.
Therefore, the distance L5 in the tire circumferential direction from the vertex 27a of the first block side wall 25 to the above-mentioned one end 30a of the first sipe 30 is preferably not less than 0.05 times, more preferably not less than 0.10 times, and preferably not more than 0.30 times, more preferably not more than 0.20 times the distance L4 in the tire circumferential direction from the vertex 27a of the first block side wall 25 to the end 28 of the first block side wall 25 on one side in the tire circumferential direction.

From a similar standpoint, the distance L7 in the tire circumferential direction from the vertex 27b of the second block side wall 26 to the other end 30b of the first sipe 30 is preferably not less than 0.05 times, more preferably not less than 0.10 times, and preferably not more than 0.30 times, more preferably not more than 0.20 times the distance L6 in the tire circumferential direction from the vertex 27b of the second block side wall 26 to the end of the second block side wall 26 on the other side in the tire circumferential direction.

Preferably, one end 30a and the other end 30b of the first sipe 30 are connected to slots 37 of the block side walls 25 and 26. The slot 37 is a sloping surface which is a part of the block side wall (25, 26) whose angle with respect to a tire radial direction is larger than those on both sides thereof, and which intersects with the tread of the block. Thereby, uneven wear starting from the ends of the first sipe 30 can be prevented.

In accordance with the invention the regions 35a and 35b subdivided by the first sipe 30 are each provided with a second sipe 38. The second sipe 38 is an independent closed sipe which is connected with neither a groove nor a sipe, and of which both ends are terminated within the region (35a, 35b). Such second sipe 38 can mitigate deformation of the regions when contacting with the ground, while maintaining the rigidity of the block 20. In this embodiment, in particular, as the second sipes 38 are disposed on both sides in the tire circumferential direction of the third portion 33, uneven wear in the vicinity of the third portion 33 can be effectively controlled.

The second sipe 38 in this example has a wavy configuration extending in the tire axial direction while oscillating in the tire circumferential direction. Preferably, the second sipe 38 has an axial length L10 more than that of the third portion 33 of the first sipe 30. Thereby, deformation of the regions when contacting with the ground can be further mitigated.

It is preferable that the peak-to-peak amplitude A2 in the tire circumferential direction of the second sipe 38 is less than the amplitude A1 of the first sipe 30 in the first portion 31 and the second portion. Thereby, uneven wear at the edges of the second sipe 38 can be prevented.

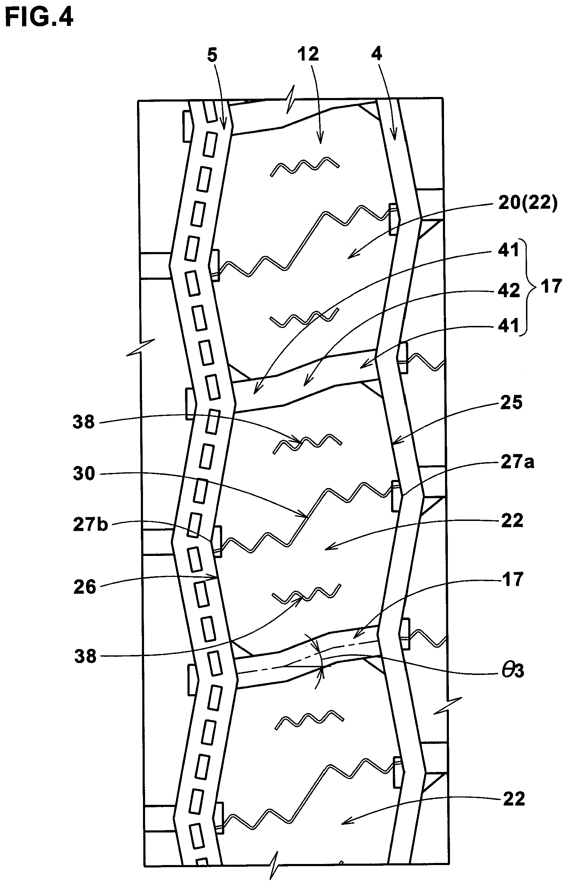

As shown in Fig. 4, each of the middle land regions 12 in this example is a row of the circumferentially arranged middle blocks 22. The middle blocks 22 are divided by the crown main grooves 4, the shoulder main grooves 5, and middle axial grooves 17 connecting therebetween.

The middle axial groove 17 in this example is inclined with respect to the tire axial direction at an angle θ3 of from 5 to 15 degrees, and has a bent point. Preferably, the middle axial groove 17 in this example has two bent points and is composed of a pair of first axial groove portions 41 and a second axial groove portion 42 therebetween.
The first axial groove portions 41 are respectively connected to the crown main groove 4 and the shoulder main groove 5. The second axial groove portion 42 inclined with respect to the tire axial direction at an angle more than those of the first axial groove portions 41.
Thereby, during running in wet conditions, water in the first axial groove portions 41 is smoothly guided toward the main grooves to improve the wet performance.

In this embodiment, the middle block 22 has a similar configuration to the above described center block 21. That is, the middle block 22 has the block side walls 25 and 26, and is provided with the first sipe 30 and the second sipes 38.

In the middle block 22 shown in Fig. 4 and the center block 21 shown in Fig. 3, the same reference numbers are used for the same components.

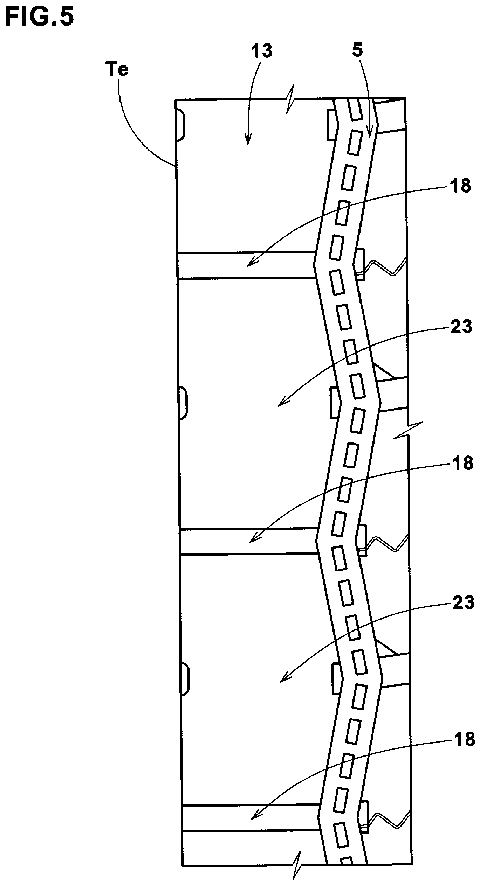

As shown in Fig. 5, in each shoulder land region 13 in this example, shoulder blocks 23 are arranged in the tire circumferential direction.
The shoulder blocks 23 are divided by shoulder axial grooves 18 extending from the shoulder main groove 5 to the tread edge Te.

The shoulder axial grooves 18 in this example extend straight in parallel with the tire axial direction. Preferably, the depth of the shoulder axial groove 18 is in a range of from 0.05 to 0.25 times the depth of the shoulder main grooves 5. Thus, as the tread portion is provided with the shoulder land regions 13 having higher rigidity, the load in the ground contacting parts of the center land region 11 and the middle land regions 12 (shown in Fig. 1) can be mitigated. Accordingly, the center land region 11 and the middle land regions 12 are further improved in the uneven wear resistance.

The shoulder block 23 in this example has a tread having a substantially pentagonal shape. Preferably, the treads of the shoulder blocks 23 are provided with no sipe. Such shoulder blocks 23 can exert good durability.

while detailed description has been made of an especially preferable embodiment of the present invention, the present invention can be embodied in various forms without being limited to the illustrated embodiment.

### Comparison Tests

Based on the tread pattern shown in Fig. 1, heavy duty pneumatic tires of size 11R22.5 (wheel rim: 22.5x8.25) having specifications listed in Table 1 were experimentally manufactured.

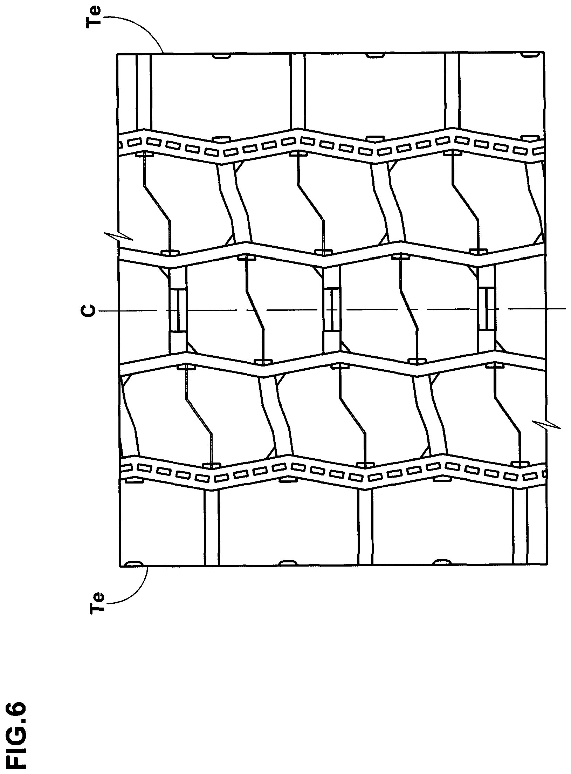

As a comparative example 1, a heavy duty pneumatic tire provided with a tread pattern shown in Fig. 6 was experimentally manufactured, wherein a crank shaped sipe was connected to the vertices of the block side walls.

As a comparative example 2, a heavy duty pneumatic tire provided with a tread pattern based on that in Fig. 1 was experimentally manufactured, wherein the ends of the first sipe were positioned at the vertices of the block side walls.

The tires were tested for the wet performance, wear resistance and uneven wear.
Specifications common to all of the test tires are as follows.
tire pressure: 720 kPa
wheels on which test tires were mounted: all
test vehicle: 10 ton truck loaded with 50% of the load
   capacity on the front part of the loading space

### < wet performance test >

On an asphalted road surface of a test course covered with 5 mm depth water, the time was measured which time was required to travel for ten meters when starting the test vehicle in the second gear while keeping the number of revolutions of the engine at 1500 rpm.

The results are indicated in Table 1 by an index based on the time of the comparative example 1 being 100, wherein the smaller the value, the better the wet performance.

### < wear resistance test >

using the above-mentioned test vehicle, the amount of wear of the center blocks was measured after traveling on a dry road for a predetermined distance.

The results are indicated in Table 1 by an index based on the amount of wear of the comparative example 1 being 100, wherein the smaller the value, the better the wear resistance.

### < Uneven wear test >

using the above-mentioned test vehicle, the vicinities of the vertices of the block side walls were visually checked for whether uneven wear was caused or not after traveling on a dry road for a predetermined distance.

The results are shown in Table 1.

**Table 1**

| Tire | Ref.1 | Ref.2 | Ex.1 | Ex.2 | Ex.3 | Ex.4 | Ex.5 | Ex.6 | Ex.7 |
|---|---|---|---|---|---|---|---|---|---|
| tread pattern (Fig.No.) | 6 | 1 | 1 | 1 | 1 | 1 | 1 | 1 | 1 |
| Distance L5 from block side wall vertex to sipe end/Distance L4 from vertex to block end | 0 | 0 | 0.05 | 0.20 | 0.30 | 0.05 | 0.05 | 0.05 | 0.05 |
| first and second portions¹ amplitude A1/maximum circumferential length L1 | 0 | 0.07 | 0.07 | 0.07 | 0.07 | 0.20 | 0.30 | 0.07 | 0.07 |
| third portion length L3/block maximum axial length L2 | 0.27 | 0.27 | 0.27 | 0.27 | 0.27 | 0.27 | 0.27 | 0.20 | 0.35 |
| wet performance | 100 | 96 | 94 | 94 | 93 | 94 | 95 | 94 | 93 |
| wear resistance | 100 | 97 | 93 | 94 | 95 | 93 | 94 | 95 | 94 |
| uneven wear *1 | Y | Y | N | N | N | N | N | N | N |

| | | | | | | | | | |
|---|---|---|---|---|---|---|---|---|---|
| *1) Y: uneven wear occurred, N: not occurred | | | | | | | | | |

As shown in Table 1, it was confirmed that the pneumatic tires as embodiments were improved in the uneven wear resistance.

### Description of the signs

- 2: tread portion
- 3: main groove
- 15: axial groove
- 20: block
- 25: first block side wall
- 26: second block side wall
- 27a: first the vertex of the block side wall
- 27b: second the vertex of the block side wall
- 30: first sipe
- 30a: one end of first sipe
- 30b: the other end of first sipe

## Claims

1. **A pneumatic tire comprising**
a tread portion (2) provided with a plurality of blocks (20) divided by a plurality of main grooves (3) extending continuously in the tire circumferential direction, and a plurality of axial grooves (16, 17, 18) connecting between the main grooves (3),
wherein
the blocks (20) include a siped block (20),
the siped block (20) has a first block side wall (25) and a second block side wall (26) respectively extending along the main grooves (3) on both sides thereof, and is provided with a first sipe (30) extending from the first block side wall (25) to the second block side wall (26),
in the top view of the siped block (20), the first block side wall (25) and the second block side wall (26) are substantially v-shaped to have a vertex (27a, 27b) protruding in the tire axial direction outwardly of the block (20), and
one end of the first sipe (30) is positioned on one side in the tire circumferential direction of the vertex (27a) of the first block side wall (25), whereas the other end of the first sipe (30) is positioned on the other side in the tire circumferential direction of the vertex (27b) of the second block side wall (26),
**characterized in that**
the first sipe (30) subdivides the siped block (20) into two regions (35a, 35b), each region (35a, 35b) being provided with a second sipe (38) which is connected with neither a groove nor a sipe and of which both ends are terminated within the region (35a, 35b).

2. The pneumatic tire according to claim 1, wherein
the first sipe (30) comprises a first portion (31) including one end (30a), a second portion (32) including the other end (30b), and a third portion (33) between the first portion (31) and the second portion (32),
each of the first portion (31) and the second portion (32) has a wavy configuration extending in the tire axial direction while oscillating in the tire circumferential direction,
the first portion (31) and the second portion (32) are shifted from each other in the tire circumferential direction, and
the third portion (33) extends straight while inclining with respect to the tire axial direction.

3. The pneumatic tire according to claim 2, wherein
the axial length of the third portion (33) is in a range of from 0.20 to 0.35 times the maximum length in the tire axial direction of the block (20).

4. The pneumatic tire according to claim 2 or 3, wherein
the amplitudes in the tire circumferential direction of the first portion (31) and the second portion (32) are in a range of from 0.05 to 0.20 times the maximum length in the tire circumferential direction of the block (20).

5. The pneumatic tire according to any one of claims 1-4, wherein
the distance in the tire circumferential direction from the vertex (27a) of the first block side wall (25) to said one end (30a) of the first sipe (30) is in a range of from 0.05 to 0.20 times the distance in the tire circumferential direction from the vertex (27a) of the first block side wall (25) to an end (28) of the first block side wall (25) on said one side in the tire circumferential direction.

6. The pneumatic tire according to any one of claims 1-5, wherein
the main grooves (3) include a pair of crown main grooves (4) disposed one on each side of the tire equator, and a pair of shoulder main grooves (5) disposed axially outside the crown main grooves (4),
the axial grooves (16, 17, 18) include center axial grooves (16) connecting between a pair of the crown main grooves (4), middle axial grooves (17) connecting between the crown main grooves (4) and the shoulder main grooves (5), and shoulder axial grooves (18) extending from the shoulder main grooves (5) to the tire tread edges,
the center axial grooves (16) and the shoulder axial grooves (18) extend straight in parallel with the tire axial direction, and
the middle axial grooves (17) incline with respect to the tire axial direction and each have a bent part.

7. The pneumatic tire according to claim 6, wherein
the depth of the shoulder axial groove (18) is in a range of from 0.05 to 0.25 times the depth of the shoulder main groove (5).

## Patentansprüche

1. Luftreifen, umfassend
einen Laufflächenabschnitt (2), der mit einer Mehrzahl von Blöcken (20) versehen ist, die durch eine Mehrzahl von Hauptrillen (3), die sich durchgehend in der Reifenumfangsrichtung erstrecken, und einer Mehrzahl von Axialrillen (16, 17, 18), die eine Verbindung zwischen den Hauptrillen (3) herstellen, unterteilt sind,
wobei
die Blöcke (20) einen feingeschnittenen Block (20) umfassen,
der feingeschnittene Block (20) eine erste Blockseitenwand (25) und eine zweite Blockseitenwand (26) aufweist, die sich jeweils entlang der Hauptrillen (3) auf ihren beiden Seiten erstrecken, und mit einem ersten Feinschnitt (30) versehen ist, der sich von der ersten Blockseitenwand (25) zu der zweiten Blockseitenwand (26) erstreckt,
in der Draufsicht des feingeschnittenen Blockes (20) die erste Blockseitenwand (25) und die zweite Blockseitenwand (26) im Wesentlichen V-förmig sind, so dass sie einen Scheitel (27a, 27b) aufweisen, der in der Reifenaxialrichtung von dem Block (20) nach außen vorsteht, und
ein Ende des ersten Feinschnitts (30) auf einer Seite in der Reifenumfangsrichtung des Scheitels (27a) der ersten Blockseitenwand (25) angeordnet ist, wohingegen das andere Ende des ersten Feinschnitts (30) auf der anderen Seite in der Reifenumfangsrichtung des Scheitels (27b) der zweiten Blockseitenwand (26) angeordnet ist,
**dadurch gekennzeichnet, dass**
der erste Feinschnitt (30) den feingeschnittenen Block (20) in zwei Bereiche (35a, 35b) unterteilt, wobei jeder Bereich (35a, 35b) mit einem zweiten Feinschnitt (38) versehen ist, der weder mit einer Rille noch mit einem Feinschnitt verbunden ist, und dessen beide Enden innerhalb des Bereiches (35a, 35b) abgeschlossen sind.

2. Luftreifen nach Anspruch 1, wobei
der erste Feinschnitt (30) einen ersten Abschnitt (31), der ein Ende (30a) umfasst, einen zweiten Abschnitt (32), der das andere Ende (30b) umfasst, und einen dritten Abschnitt (33) zwischen dem ersten Abschnitt (31) und dem zweiten Abschnitt (32) umfasst,
ein jeder von dem ersten Abschnitt (31) und dem zweiten Abschnitt (32) eine wellige Ausgestaltung aufweist, die sich in der Reifenaxialrichtung erstreckt, während sie in der Reifenumfangsrichtung oszilliert,
der erste Abschnitt (31) und der zweite Abschnitt (32) voneinander in der Reifenumfangsrichtung verschoben sind, und
der dritte Abschnitt (33) sich gerade erstreckt, während er sich mit Bezug auf die Reifenaxialrichtung neigt.

3. Luftreifen nach Anspruch 2, wobei die axiale Länge des dritten Abschnitts (33) in einem Bereich vom 0,20- bis 0,35-fachen der maximalen Länge in der Reifenaxialrichtung des Blockes (20) liegt.

4. Luftreifen nach Anspruch 2 oder 3, wobei die Amplituden in der Reifenumfangsrichtung des ersten Abschnitts (31) und des zweiten Abschnitts (32) in einem Bereich vom 0,05- bis 0,20-fachen der maximalen Länge in der Reifenumfangsrichtung des Blockes (20) liegen.

5. Luftreifen nach einem der Ansprüche 1 bis 4, wobei der Abstand in der Reifenumfangsrichtung von dem Scheitel (27a) der ersten Blockseitenwand (25) zu dem einen Ende (30a) des ersten Feinschnitts (30) in einem Bereich vom 0,05- bis 0,20-fachen des Abstandes in der Reifenumfangsrichtung von dem Scheitel (27a) der ersten Blockseitenwand (25) zu einem Ende (28) der ersten Blockseitenwand (25) auf der einen Seite in der Reifenumfangsrichtung liegt.

6. Luftreifen nach einem der Ansprüche 1 bis 5, wobei
die Hauptrillen (3) ein Paar Kronenhauptrillen (4), die auf jeder Seite des Reifenäquators angeordnet sind, und ein Paar Schulterhauptrillen (5), die axial außerhalb der Kronenhauptrillen (4) angeordnet sind, umfassen,
die axialen Rillen (16, 17, 18) zentrale axiale Rillen (16), die eine Verbindung zwischen einem Paar der Kronenhauptrillen (4) herstellen, mittlerer axiale Rillen (17), die eine Verbindung zwischen den Kronenhauptrillen (4) und den Schulterhauptrillen (5) herstellen, und Schulteraxialrillen (18), die sich von den Schulterhauptrillen (5) zu den Reifenlaufflächenkanten erstrecken, umfassen,
die zentralen axialen Rillen (16) und die Schulteraxialrillen (18) sich gerade parallel zu der Reifenaxialrichtung erstrecken, und
die mittleren axialen Rillen (17) sich mit Bezug auf die Reifenaxialrichtung neigen und einen gebogenen Teil aufweisen.

7. Luftreifen nach Anspruch 6, wobei die Tiefe der Schulteraxialrille (18) in einem Bereich vom 0,05- bis 0,25-fachen der Tiefe der Schulterhauptrille (5) liegt.

## Revendications

1. Bandage pneumatique comprenant
une portion formant bande de roulement (2) dotée d'une pluralité de blocs (20) divisés par une pluralité de rainures principales (3) s'étendant en continu dans la direction circonférentielle du pneumatique, et d'une pluralité de rainures axiales (16, 17, 18) en connexion entre les rainures principales (3),
dans lequel
les blocs (20) incluent un bloc doté de fentes (20),
le bloc (20) doté de fentes possède une première paroi latérale de bloc (25) et une seconde paroi latérale de bloc (26) s'étendant respectivement le long des rainures principales (3) sur les deux côtés de celles-ci, et est doté d'une première fente (30) s'étendant depuis la première paroi latérale de bloc (25) jusqu'à la seconde paroi latérale de bloc (26),
en vue de dessus sur le bloc (20) doté de fentes, la première paroi latérale de bloc (25) et la seconde paroi latérale de bloc (26) sont sensiblement en forme de V et présentent un sommet (27a, 27b) qui se projette en direction axiale du pneumatique vers l'extérieur du bloc (20), et
une extrémité de la première fente (30) est positionnée sur un côté, dans la direction circonférentielle du pneumatique, du sommet (27a) de la première paroi latérale de bloc (25), alors que l'autre extrémité de la première fente (30) est positionnée sur l'autre côté, dans la direction circonférentielle du pneumatique, du sommet (27b) de la seconde paroi latérale de bloc (26),
**caractérisé en ce que**
la première fente (30) subdivise le bloc (20) doté de fentes en deux régions (35a, 35b), chaque région (35a, 35b) étant dotée d'une seconde fente (38) qui n'est connectée ni avec une rainure ni avec une fente et dont les deux extrémités se terminent à l'intérieur de la région (35a, 35b).

2. Bandage pneumatique selon la revendication 1, dans lequel la première fente (30) comprend une première portion (31) incluant une extrémité (30a), une seconde portion (32) incluant l'autre extrémité (30b), et une troisième portion (33) entre la première portion (31) et la seconde portion (32),
chacune de la première portion (31) et de la seconde portion (32) présente une configuration ondulée s'étendant dans la direction axiale du pneumatique tout en oscillant dans la direction circonférentielle du pneumatique,
la première portion (31) et la seconde portion (32) sont décalées l'une par rapport à l'autre dans la direction circonférentielle du pneumatique, et
la troisième portion (33) s'étend de manière rectiligne tout en étant inclinée par rapport à la direction axiale du pneumatique.

3. Bandage pneumatique selon la revendication 2, dans lequel la longueur axiale de la troisième portion (33) est dans une plage de 0,2 à 0,35 fois la longueur maximum du bloc (20) dans la direction axiale du pneumatique.

4. Bandage pneumatique selon la revendication 2 ou 3, dans lequel les amplitudes, dans la direction circonférentielle du pneumatique, de la première portion (31) et de la seconde portion (32) sont dans une plage de 0,05 à 0,20 fois la longueur maximum du bloc (20) dans la direction circonférentielle du pneumatique.

5. Bandage pneumatique selon l'une quelconque des revendications 1 à 4, dans lequel
la distance, dans la direction circonférentielle du pneumatique, depuis le sommet (27a) de la première paroi latérale de bloc (25) jusqu'à ladite première extrémité (30a) de la première fente (30) est dans une plage de 0,05 à 0,20 fois la distance, dans la direction circonférentielle du pneumatique, depuis le sommet (27a) de la première paroi latérale de bloc (25) jusqu'à une extrémité (28) de la première paroi latérale de bloc (25) sur ledit premier côté dans la direction circonférentielle du pneumatique.

6. Bandage pneumatique selon l'une quelconque des revendications 1 à 5, dans lequel
les rainures principales (3) incluent une paire de rainures principales de couronne (4) disposées une sur chaque côté de l'équateur de pneumatique, et une paire de rainures principales d'épaulement (5) disposées axialement à l'extérieur des rainures principales de couronne (4),
les rainures axiales (16, 17, 18) incluent des rainures axiales centrales (16) en connexion entre une paire de rainures principales de couronne (4), des rainures axiales médianes (17) en connexion entre les rainures principales de couronne (4) et les rainures principales d'épaulement (5), et des rainures axiales d'épaulement (18) s'étendant depuis les rainures principales d'épaulement (5) jusqu'aux bords de la bande de roulement du pneumatique,
les rainures axiales centrales (16) et les rainures axiales d'épaulement (18) s'étendant en ligne droite et en parallèle à la direction axiale du pneumatique, et
les rainures axiales médianes (17) sont inclinées par rapport à la direction axiale du pneumatique et présentent chacune une partie cintrée.

7. Bandage pneumatique selon la revendication 6, dans lequel la profondeur de la rainure axiale d'épaulement (18) est dans une plage de 0,05 à 0,25 fois la profondeur de la rainure principale d'épaulement (5).
